# EUROPÄISCHE PATENTSCHRIFT

(11) **EP 3 347 169 B1**
(45) Veröffentlichungstag und Bekanntmachung des Hinweises auf die Patenterteilung: **20.03.2024**
(21) Anmeldenummer: 16762971.6
(22) Anmeldetag: 05.09.2016
(51) Int. Cl.: B25J 9/16

(54) **VERFAHREN UND SYSTEM ZUM STEUERN EINER ROBOTERANORDNUNG**
METHOD AND SYSTEM FOR CONTROLLING A ROBOT ARRANGEMENT
PROCÉDÉ ET SYSTÈME DE COMMANDE D'UN ENSEMBLE ROBOTIQUE

(30) Priorität: 11.09.2015 DE 102015011910
(43) Veröffentlichungstag der Anmeldung: 18.07.2018
(73) Patentinhaber: KUKA Deutschland GmbH, 86165 Augsburg (DE)
(72) Erfinder: KOGAN, Yevgen, 86152 Augsburg (DE)
(74) Vertreter: Schlotter, Alexander Carolus Paul
(86) Internationale Anmeldenummer: PCT/EP2016/001499
(87) Internationale Veröffentlichungsnummer: WO 2017/041885

(56) Entgegenhaltungen:
- EP-A1- 2 113 344
- EP-A1- 2 158 064
- EP-B1- 2 158 064
- DE-A1-102007 037 077
- DE-A1-102010 048 369
- DE-A1-102013 000 250
- DE-A1-102013 212 887

## Beschreibung

Die vorliegende Erfindung betrifft ein Verfahren zum Steuern einer Roboteranordnung mit wenigstens einem Roboter sowie ein System und Computerprogrammprodukt zur Durchführung des Verfahrens.

Aus der EP 2 158 064 B1 ist ein Verfahren zur automatisierten Anpassung eines Prozessparameters eines Roboters bekannt.

Im Ausführungsbeispiel sind für verschiedene Arbeitszonen des Roboters unterschiedliche Geschwindigkeitsüberwachungsfunktionen vorgesehen, die je nach Pose des Roboters alternativ aktiviert werden. Eine Kontrolleinrichtung passt automatisiert eine Geschwindigkeit des Roboters an die jeweils aktivierte Geschwindigkeitsüberwachungsfunktion an. Hierzu setzt die Kontrolleinrichtung im Bereich einer Rollpforte eine Geschwindigkeit des Roboters auf "stop", solange die Rollpforte geöffnet ist, und andernfalls auf "slow". Im Bereich eines Mensch-Roboter-Kooperations-Arbeitsraums setzt die Kontrolleinrichtung die Geschwindigkeit des Roboters auf "stop", solange eine Person anwesend ist, und andernfalls auf "slow". Im übrigen Arbeitsraum setzt die Kontrolleinrichtung die Geschwindigkeit des Roboters auf "slow", solange der Roboter sich in einem Randbereich befindet, andernfalls auf "high".

Durch diese automatisierte Anpassung der Geschwindigkeit kann vorteilhaft eine Verletzung der jeweils aktivierten Geschwindigkeitsüberwachungsfunktion vermieden werden.

Aus der DE 10 2013 000 250 A1 ist es bekannt, mehrere Sicherheitsüberwachungsfunktionen parallel verknüpft zu aktivieren und nur dann, wenn keine dieser Sicherheitsüberwachungsfunktionen nicht verletzt ist, eine mit diesen Sicherheitsüberwachungsfunktionen verknüpfte Sicherheitsreaktion auszuführen.

Im Ausführungsbeispiel sind eine Geschwindigkeitsüberwachungsfunktion, eine Werkzeugüberwachungsfunktion und eine Bedienerschutzüberwachungsfunktion parallel verknüpft aktiviert. Nur, sofern sowohl die Geschwindigkeitsüberwachungsfunktion aufgrund einer Überschreitung eines Geschwindigkeitsgrenzwertes als auch die Werkzeugüberwachungsfunktion aufgrund eines aktivierten Laserwerkzeugs als auch die Bedienerschutzüberwachungsfunktion aufgrund einer geöffneten Schutzraumtür verletzt sind, wird ein STOP1 ausgelöst.

Somit kann vorteilhaft beispielsweise auch bei aktiviertem Laserwerkzeug und/oder geöffneter Schutzraumtür langsam bzw. unterhalb des Geschwindigkeitsgrenzwertes verfahren werden und umgekehrt schneller bzw. oberhalb des Geschwindigkeitsgrenzwertes verfahren werden, solange wenigstens das Laserwerkzeug deaktiviert oder die Schutzraumtür geschlossen ist.

Sind jedoch mehrere Sicherheitsüberwachungsfunktionen parallel aktiviert, müssen Prozessparameter wie beispielsweise die Geschwindigkeit bisher mühsam und fehleranfällig individuell manuell angepasst werden, um eine parallele Verletzung aller aktivierter Sicherheitsüberwachungsfunktionen und damit ein Ausführen der damit verknüpften Sicherheitsreaktion zu vermeiden, da das aus der EP 2 158 064 B1 bekannte Verfahren darauf basiert, dass jeweils nur eine von mehreren alternativen Sicherheitsüberwachungsfunktionen aktiviert ist, auf deren Basis dann der dieser eindeutig zugeordnete Prozessparameter automatisiert angepasst wird.

Ein aus der EP 2 113 344 A1 bekanntes Verfahren umfasst die Schritte: Überwachen einer Sicherheitsfunktion eines Manipulators; Überwachen einer Zustandsgröße des Manipulators; und Stillsetzen des Manipulators, wenn die überwachte Sicherheitsfunktion nicht erfüllt ist; wobei der Manipulator in einem ersten Modus stillgesetzt wird, wenn die überwachte Zustandsgröße in einem ersten Bereich liegt und in einem von dem ersten Modus verschiedenen zweiten Modus stillgesetzt wird, wenn die überwachte Zustandsgröße in einem zweiten Bereich liegt.

Eine Aufgabe der vorliegenden Erfindung ist es, die Steuerung einer Roboteranordnung zu verbessern.

Diese Aufgabe wird durch ein Verfahren mit den Merkmalen des Anspruchs 1 gelöst. Ansprüche 9 bis 111 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Steuern einer Roboteranordnung mit wenigstens einem Roboter den Schritt:
- Überwachen der Roboteranordnung durch mehrere parallel aktivierte Sicherheitsüberwachungsfunktionen;
und die, insbesondere während eines Ausführens einer Applikation der Roboteranordnung mehrfach wiederholten, Schritte auf:
- Auswählen einer Untermenge von Prozessparametern aus einer vorgegebenen Menge von Prozessparametern, wobei in einer Weiterbildung durch die Prozessparameter der vorgegebenen Menge, insbesondere Anpassung der Prozessparameter der vorgegebenen Menge, eine Verletzung wenigstens einer der Sicherheitsüberwachungsfunktionen vermeidbar ist, auf Basis einer vorgegebenen Regelanordnung mit wenigstens einer Auswahlregel; und
- Anpassen dieser ausgewählten Untermenge von Prozessparametern bzw. des bzw. der Prozessparameter(s) der ausgewählten Untermenge zur Vermeidung einer Verletzung wenigstens einer der Sicherheitsüberwachungsfunktionen bzw. derart, dass eine Verletzung wenigstens einer der Sicherheitsüberwachungsfunktionen vermieden wird.

Entsprechend ist in einer Ausführung der vorliegenden Erfindung ein System zum Steuern einer bzw. der Roboteranordnung mit wenigstens einem Roboter, insbesondere hard- und/oder software-, insbesondere programmtechnisch, zur Durchführung eines hier beschriebenen Verfahrens eingerichtet und/oder weist auf:
- Mittel zum Überwachen der Roboteranordnung durch mehrere parallel aktivierte Sicherheitsüberwachungsfunktionen;
- Mittel zum, insbesondere während eines Ausführens einer Applikation der Roboteranordnung mehrfach wiederholten und/oder wenigstens teilweise automatisierten, Auswählen einer Untermenge von Prozessparametern aus einer vorgegebenen Menge von Prozessparametern, wobei in einer Weiterbildung durch die Prozessparameter der vorgegebenen Menge, insbesondere Anpassung der Prozessparameter der vorgegebenen Menge, eine Verletzung wenigstens einer der Sicherheitsüberwachungsfunktionen vermeidbar ist, auf Basis einer vorgegebenen Regelanordnung mit wenigstens einer Auswahlregel; und
- Mittel zum, insbesondere während des Ausführens der Applikation der Roboteranordnung mehrfach wiederholten, Anpassen dieser ausgewählten Untermenge von Prozessparametern zur Vermeidung einer Verletzung wenigstens einer der Sicherheitsüberwachungsfunktionen bzw. derart, dass eine Verletzung wenigstens einer der Sicherheitsüberwachungsfunktionen vermieden wird.

Durch die regel(werk)basierte Auswahl einer Untermenge können in einer Ausführung vorteilhaft ein oder mehrere Prozessparameter der Roboteranordnung wenigstens teilweise automatisiert angepasst werden, um eine Verletzung (wenigstens) einer der parallel aktivierten Sicherheitsüberwachungsfunktionen zu vermeiden. Bezüglich der Anpassung der ausgewählten (Untermenge von) Prozessparameter(n) wird ergänzend auch Bezug auf die einleitend genannte EP 2 158 064 B1, bezüglich der parallel aktivierten Sicherheitsüberwachungsfunktionen und einer damit verknüpften Sicherheitsreaktion ergänzend auch Bezug auf die einleitend genannte DE 10 2013 000 250 A1 genommen, deren Inhalt jeweils vollständig in die vorliegende Offenbarung einbezogen wird.

Die Roboteranordnung weist in einer Ausführung einen oder mehrere Roboter mit mehreren, insbesondere wenigstens drei, insbesondere wenigstens sechs, insbesondere wenigstens sieben, aktuierbaren bzw. , insbesondere elektromotorisch, aktuierten (Bewegungs)achsen, insbesondere Drehachsen, auf.

In einer Ausführung hängt wenigstens ein Prozessparameter der vorgegebenen Menge von Prozessparametern von (wenigstens) einer Antriebskraft der Roboteranordnung und/oder einer von der Roboteranordnung ausgeübten Kraft ab, er kann diese insbesondere angeben bzw. beschreiben.

Zur kompakteren Darstellung wird vorliegend auch ein antiparalleles Kräftepaar bzw. Drehmoment verallgemeinernd als (eine) Kraft im Sinne der vorliegenden Erfindung bezeichnet.

Zusätzlich oder alternativ kann wenigstens ein Prozessparameter der vorgegebenen Menge von Prozessparametern in einer Ausführung von einer Pose der Roboteranordnung und/oder einer Zeitableitung der Pose abhängen, insbesondere diese angeben bzw. beschreiben, insbesondere eine(r) Lage und/oder Orientierung eines oder mehrerer roboter- bzw. roboteranordnungsfester Referenzen, insbesondere eines oder mehrerer TCPs, eine(r) oder mehrere(n) Gelenkkoordinaten, insbesondere -winkel, des Roboters bzw. der Roboteranordnung, und/oder einer entsprechenden Geschwindigkeit und/oder Beschleunigung und/oder höheren Zeitableitung.

Ein Prozessparameter kann insbesondere eindimensional bzw. ein Skalar oder mehrdimensional, insbesondere ein Vektor, sein.

Die Applikation kann in einer Ausführung ein, insbesondere vorgegebenes und/oder abgespeichertes, Steuerprogramm der bzw. für die Roboteranordnung aufweisen, insbesondere durch dieses definiert bzw. vorgegeben sein bzw. werden. Das Steuerprogramm gibt in einer Ausführung (Soll)Bewegungen des bzw. der Roboter der Roboteranordnung und/oder Aktionen von, insbesondere robotergeführten, Werkzeugen der Roboteranordnung, vor. Insbesondere die, insbesondere automatisierte, Abarbeitung des Steuerprogramms wird vorliegend als Ausführen der Applikation bezeichnet.

Eine Sicherheitsüberwachungsfunktion umfasst in einer Ausführung eine, insbesondere parametrierbare, Überwachung (wenigstens) einer extern auf die Roboteranordnung wirkende Kraft, (wenigstens) einer Antriebskraft der Roboteranordnung, einer Pose der Roboteranordnung und/oder wenigstens einer Zeitableitung hiervon, insbesondere auf Über- und/oder Unterschreiten, insbesondere parametrierbarer, Grenzen.

Die Roboteranordnung wird in einer Ausführung durch die parallel aktivierten Sicherheitsüberwachungsfunktionen überwacht, indem diese (jeweils) einen oder mehrere Ist-Prozessparameter der Roboteranordnung überwachen, insbesondere einen oder mehrere Ist-Prozessparameter, die (Soll-)Prozessparametern der vorgegebenen Menge von Prozessparametern entsprechend bzw. zu diesen korrespondieren bzw. von der- oder denselben Größen abhängen, insbesondere dieselbe(n) Größe(n) beschreiben bzw. angeben, insbesondere die vorstehend genannte Kraft, Pose und/oder Zeitableitung.

In einer Ausführung wird bzw. ist eine Verletzung einer Sicherheitsüberwachungsfunktion im Sinne der vorliegenden Erfindung, insbesondere durch Anpassen von Prozessparametern, vermieden bzw. vermeidbar, sofern bzw. indem die Prozessparameter, insbesondere bedarfsweise und/oder innerhalb vorgegebener Grenzen, derart angepasst, insbesondere vorgegeben werden bzw. sind, dass eine Verletzung der Sicherheitsüberwachungsfunktion, insbesondere der Betrag einer Überschreitung von Grenzwerten oder dergleichen, minimiert wird bzw. ist, insbesondere nicht auftritt.

Da eine Sicherheitsüberwachungsfunktion auch bei entsprechend( angepasst)en Prozessparametern, beispielsweise durch externe Ereignisse, verletzt werden kann, wird unter "vermeidbar/vermieden/Vermeiden" im Sinne der vorliegenden Erfindung insbesondere "vermeidbar/vermieden/Vermeiden soweit möglich verstanden". So kann beispielsweise eine extern erzwungene Bewegung der Roboteranordnung in eine verbotene Pose eine Verletzung einer Posen-Sicherheitsüberwachungsfunktion hervorrufen. Gleichwohl ist bzw. wird diese Verletzung der Posen-Sicherheitsüberwachungsfunktion im Sinne der vorliegenden Erfindung vermeidbar bzw. vermieden, sofern bzw. indem jedenfalls eine zulässige Pose als Soll-Pose der Roboteranordnung vorgegeben wird bzw. ist

Eine Verletzung einer Posen-Sicherheitsüberwachungsfunktion kann insbesondere durch einen Prozessparameter bzw. dessen Anpassung vermeidbar sein bzw. vermieden werden, der von der Pose der Roboteranordnung abhängt, insbesondere diese an- bzw. vorgibt. Insbesondere kann eine Anpassung in Form einer Beschränkung zulässiger bzw. anfahrbarer Posen eine Verletzung einer Posen bzw. Raum-Sicherheitsüberwachungsfunktion im Sinne der vorliegenden Erfindung vermeiden.

Entsprechend kann eine Verletzung einer Geschwindigkeits- oder Beschleunigungs-Sicherheitsüberwachungsfunktion insbesondere durch einen Prozessparameter bzw. dessen Anpassung vermeidbar sein bzw. vermieden werden, der von der Geschwindigkeit bzw. Beschleunigung der Roboteranordnung abhängt, insbesondere diese an- bzw. vorgibt. Insbesondere kann eine Anpassung in Form einer Beschränkung zulässiger bzw. Reduzierung von Geschwindigkeiten bzw. Beschleunigungen eine Verletzung einer Geschwindigkeits- bzw. Beschleunigungs-Sicherheitsüberwachungsfunktion im Sinne der vorliegenden Erfindung vermeiden.

Eine Verletzung einer Kraft-Sicherheitsüberwachungsfunktion kann insbesondere durch einen Prozessparameter bzw. dessen Anpassung vermeidbar sein bzw. vermieden werden, der von einer Antriebskraft der Roboteranordnung abhängt, insbesondere diese an- bzw. vorgibt. Insbesondere kann eine Anpassung in Form einer Beschränkung zulässiger Antriebskräfte eine Verletzung einer Kraft-Sicherheitsüberwachungsfunktion im Sinne der vorliegenden Erfindung vermeiden.

In einer Ausführung wird bzw. ist die vorgegebene Menge von Prozessparametern, durch die in einer Weiterbildung eine Verletzung wenigstens einer der Sicherheitsüberwachungsfunktionen vermeidbar ist bzw. vermieden werden kann, wahlweise verändert bzw. veränderbar, insbesondere parametriert bzw. parametrierbar und/oder um einen oder mehrere Prozessparameter erweitert bzw. erweiterbar. In einer Ausführung wird bzw. ist die Menge von Prozessparametern derart vorgegeben, dass durch diese Prozessparameter bzw. deren Anpassung eine Verletzung einer oder mehrerer der parallel aktivierten Sicherheitsüberwachungsfunktionen vermeidbar ist bzw. vermieden wird bzw. werden kann. Erfindungsgemäß weist die vorgegebene Menge von Prozessparametern einen oder mehrere Prozessparameter auf, durch die bzw. deren Anpassung eine Verletzung einer der parallel aktivierten Sicherheitsüberwachungsfunktionen vermeidbar ist bzw. vermieden wird bzw. werden kann, und einen oder mehrere andere Prozessparameter, durch die bzw. deren Anpassung eine Verletzung einer weiteren der parallel aktivierten Sicherheitsüberwachungsfunktionen vermeidbar ist bzw. vermieden wird bzw. werden kann.

In einer Ausführung überwacht wenigstens eine Sicherheitsüberwachungsfunktion einen Ist-Prozessparameter der Roboteranordnung. Dann kann in einer Ausführung eine Verletzung dieser Sicherheitsüberwachungsfunktion insbesondere durch Anpassen eines diesem Ist-Prozessparameter entsprechenden bzw. zu diesem Ist-Prozessparameter korrespondierenden (Soll-)Prozessparameters der vorgegebenen Menge von Prozessparametern vermeidbar sein bzw. vermieden werden, der von der- bzw. denselben Größen der Roboteranordnung abhängt bzw. diese an- bzw. vorgibt.

Entsprechend sind in einer Ausführung ein oder mehrere Prozessparameter der vorgegebenen Menge von Prozessparametern, durch die in einer Weiterbildung eine Verletzung wenigstens einer der Sicherheitsüberwachungsfunktionen vermeidbar ist bzw. vermieden wird bzw. werden kann, Soll-Prozessparameter. Insbesondere kann die vorgegebene Menge von Prozessparametern einen Soll-Prozessparameter zur Vorgabe einer Pose, Geschwindigkeit und/oder Beschleunigung der Roboteranordnung und/oder einen Soll-Prozessparameter zur Vorgabe einer Antriebskraft der Roboteranordnung und/oder einen Soll-Prozessparameter zur Vorgabe einer von der Roboteranordnung ausgeübten Kraft aufweisen.

In einer Ausführung ordnen eine oder mehrere Auswahlregeln der Regelanordnung (jeweils) einer der Sicherheitsüberwachungsfunktionen, insbesondere bijektiv bzw. eineindeutig, einen der Prozessparameter aus der vorgegebenen Menge von Prozessparametern als auszuwählende Untermenge zu, die somit (jeweils) auch aus einem Objekt bzw. Prozessparameter bestehen kann, insbesondere einen Soll-Prozessparameter, der einem von der Sicherheitsüberwachungsfunktionen überwachten Ist-Prozessparameter entspricht bzw. zu diesem korrespondiert. So kann insbesondere durch eine Auswahlregel einer Posen- bzw. Raum-Sicherheitsüberwachungsfunktion ein Prozessparameter als auszuwählende Untermenge zugeordnet sein, der von der Pose der Roboteranordnung abhängt, insbesondere diese an- bzw. vorgibt. Zusätzlich oder alternativ kann durch eine Auswahlregel einer Geschwindigkeits- oder Beschleunigungs-Sicherheitsüberwachungsfunktion ein Prozessparameter als auszuwählende Untermenge zugeordnet sein, der von einer Geschwindigkeit bzw. Beschleunigung der Roboteranordnung abhängt, insbesondere diese an- bzw. vorgibt. Zusätzlich oder alternativ kann durch eine Auswahlregel einer Kraft-Sicherheitsüberwachungsfunktion ein Prozessparameter als auszuwählende Untermenge zugeordnet sein, der von einer extern auf die Roboteranordnung wirkenden Kraft, einer Antriebskraft der Roboteranordnung und/oder einer von der Roboteranordnung ausgeübten Kraft abhängt, insbesondere diese an- bzw. vorgibt.

Insbesondere daher kann in einer Ausführung vorteilhaft ein Prozessparameter als Untermenge auch auf Basis, insbesondere durch Auswahl, der ihm bijektiv zugeordneten Sicherheitsüberwachungsfunktionen ausgewählt werden. So kann beispielsweise durch Auswahl einer Geschwindigkeits-Sicherheitsüberwachungsfunktion als (wenigstens) nicht zu verletzende Sicherheitsüberwachungsfunktion ein dieser zugeordneter Geschwindigkeits-Prozessparameter als Untermenge ausgewählt werden, durch Auswahl einer Kraft-Sicherheitsüberwachungsfunktion als (wenigstens) nicht zu verletzende Sicherheitsüberwachungsfunktion ein dieser zugeordneter Kraft-Prozessparameter.

In einer Ausführung können, insbesondere durch die Applikation, insbesondere einen entsprechenden Steuerbefehl, ein oder mehrere Prozessparameter der vorgegebenen Menge von Prozessparametern als beizubehaltend(e) Prozessparameter ausgewählt werden. Dann ordnet in einer Ausführung eine Auswahlregel diesem bzw. diesen als beizubehaltend ausgewählten Prozessparameter(n) jeweils eine Untermenge der vorgegebenen Menge von Prozessparametern als auszuwählende Untermenge anzupassender Prozessparameter zu, die diese beizubehaltenden Prozessparameter nicht enthält, insbesondere hierzu komplementär ist. Besteht beispielsweise die vorgegebene Menge von Prozessparametern aus einem Kraft- und einem Geschwindigkeits-Prozessparameter und wird durch die Applikation eine Geschwindigkeit als beizubehaltend ausgewählt, so kann eine Auswahlregel der Regelanordnung entsprechend den Kraft-Prozessparameter als Untermenge bzw. anzupassenden Prozessparameter auswählen und umgekehrt.

In einer Ausführung kann die Auswahl vollständig automatisiert bzw. ohne Abfrage einer Benutzereingabe erfolgen. Gleichermaßen kann, insbesondere wahlweise, auch eine Abfrage einer Benutzereingabe erfolgen bzw. vorgesehen sein, mit der ein Benutzer insbesondere aus einer vollständig automatisiert vorausgewählten Teilmenge bzw. Vorauswahl von möglichen Untermengen bzw. Prozessparametern eine Untermenge, insbesondere einen Prozessparameter, auswählen kann, was vorliegend als teilautomatisiertes Auswählen bezeichnet wird.

Die Regelanordnung ist in einer Ausführung abgespeichert. Sie ist in einer Ausführung, insbesondere benutzer- und/oder applikationsseitig, veränder-, insbesondere parametrierbar. Insbesondere können in einer Ausführung, insbesondere durch einen Benutzer und/oder eine auszuführende bzw. ausgeführte Applikation, ein oder mehrere Auswahlregeln (um)parametriert, (um)priorisiert, hinzugefügt bzw. aktiviert und/oder entfernt bzw. deaktiviert werden.

In einer Ausführung wird bzw. werden der bzw. die Prozessparameter der Untermenge bedarfsweise bzw. nur dann angepasst, wenn bei unangepasstem Prozessparameter bzw. unangepassten Prozessparametern alle parallel aktivierten Sicherheitsfunktionen verletzen würden. So muss entsprechend eine Geschwindigkeit eines Roboters, die unterhalb eines durch eine aktivierte Sicherheitsüberwachungsfunktion überwachten Geschwindigkeitsgrenzwertes liegt, nicht angepasst, insbesondere reduziert, werden.

Eine Sicherheitsüberwachungsfunktion kann in einer Ausführung auf Basis einer Benutzereingabe, der Applikation, insbesondere eines vorgegebenen Steuerbefehls der Applikation, und/oder eines Zustands, insbesondere einer Pose, der Roboteranordnung aktiviert oder deaktiviert werden. Insbesondere kann in einer Ausführung eine Benutzereingabe erfasst und auf deren Basis eine durch die Eingabe bestimmte Sicherheitsüberwachungsfunktion aktiviert oder deaktiviert werden. Zusätzlich oder alternativ kann die Applikation eine Vorgabe zu aktivierender bzw. aktiv(iert)er Sicherheitsüberwachungsfunktionen aufweisen. Insbesondere können in einer Ausführung einzelne Sicherheitsüberwachungsfunktionen durch abgespeicherte Steuerbefehle der Applikation aktiviert oder deaktiviert werden. Zusätzlich oder alternativ kann in einer Ausführung eine Sicherheitsüberwachungsfunktion aktiviert oder deaktiviert werden, sobald ein Roboter der Roboteranordnung in einen vorgegebenen Arbeitsraum eindringt oder aus einem vorgegebenen Arbeitsraum austritt. Eine (De)Aktvierung einer Sicherheitsfunktionsüberwachung kann in einer Ausführung die vorgegebene Menge von Prozessparametern, durch die in einer Weiterbildung eine Verletzung wenigstens einer der aktivierten Sicherheitsüberwachungsfunktionen vermeidbar ist bzw. vermieden wird bzw. werden kann, verändern, insbesondere dieser Prozessparameter hinzufügen oder Prozessparameter aus dieser entfernen.

In einer Ausführung wird eine mit den parallel aktivierten Sicherheitsüberwachungsfunktionen verknüpfte Sicherheitsreaktion der Roboteranordnung nur ausgeführt, sofern dem keine dieser Sicherheitsüberwachungsfunktionen entgegenwirkt bzw. -steht. Erfindungsgemäß wird eine mit den parallel aktivierten Sicherheitsüberwachungsfunktionen verknüpfte Sicherheitsreaktion der Roboteranordnung nicht ausgeführt, sofern bzw. solange (wenigstens) eine dieser Sicherheitsüberwachungsfunktionen nicht verletzt ist bzw. wird. Insofern wird in einer Ausführung eine mit den parallel aktivierten Sicherheitsüberwachungsfunktionen verknüpfte Sicherheitsreaktion der Roboteranordnung nur ausgeführt, sofern dem keine Nicht-Verletzung dieser Sicherheitsüberwachungsfunktionen entgegenwirkt bzw. -steht.

Erfindungsgemäß umfasst die vorgegebene Regelanordnung eine hierarchisierte Mehrzahl untereinander, insbesondere veränderbar, priorisierter Auswahlregeln. Erfindungsgemäß wird die Untermenge anzupassender Prozessparameter auf Basis einer bzw. der am höchsten priorisierten Auswahlregel der Regelanordnung ausgewählt. Entsprechend ist in einer Ausführung die Regelanordnung derart hierarchisiert, dass stets eindeutig eine der Auswahlregeln am höchsten priorisiert ist bzw. wird.

In einer Ausführung können eine oder mehrere Auswahlregeln (jeweils) mit der von ihr bestimmten Untermenge anzupassender Prozessparameter bijektiv sein bzw. (jeweils) stets dieselbe Untermenge anzupassender Prozessparameter bestimmen, insbesondere mit dieser identisch sein, beispielsweise eine erste Auswahlregel stets eine erste Untermenge anzupassender Prozessparameter bestimmen und eine zweite Auswahlregel stets eine zweite Untermenge anzupassender Prozessparameter bestimmen.

Zusätzlich oder alternativ können in einer Ausführung eine oder mehrere Auswahlregeln auch (jeweils) abhängig von einer, insbesondere derselben oder verschiedenen, ein- oder mehrdimensionalen Zusatzbedingung(en) auch unterschiedliche Untermengen anzupassender Prozessparameter bestimmen, beispielsweise eine Auswahlregel eine erste Untermenge anzupassender Prozessparameter, sofern die Roboteranordnung sich in einem ersten Arbeitsraum befindet, und eine zweite Untermenge anzupassender Prozessparameter, sofern die Roboteranordnung sich in einem zweiten Arbeitsraum befindet.

Entsprechend umfassen in einer Ausführung eine oder mehrere Auswahlregel(n) der Regelanordnung (jeweils) eine hierarchisierte Mehrzahl untereinander, insbesondere veränderbar, priorisierter Untermengen anzupassender Prozessparameter der vorgegebenen Menge von Prozessparametern. In einer Ausführung wird (auf Basis der Regelanordnung) die Untermenge der Regelanordnung ausgewählt, die auf Basis der, insbesondere einzigen oder am höchsten priorisierten, Auswahlregel am höchsten priorisiert ist bzw. wird.

In einer Ausführung werden bzw. sind eine oder mehrere Auswahlregeln, insbesondere Untermengen anzupassender Prozessparameter, auf Basis der Applikation priorisiert, insbesondere höher oder niedriger (um)priorisiert als ihre Default- bzw. Ausgangspriorisierung. Hierdurch kann vorteilhaft, insbesondere auch während des Ausführens der Applikation, gezielt unterschiedlichen Randbedingungen Rechnung getragen und/oder der Betrieb und/oder die Sicherheit der Roboteranordnung verbessert werden.

In einer Ausführung ist bzw. wird eine Auswahlregel, insbesondere Untermenge anzupassender Prozessparameter, auf Basis der Applikation als globale bzw. Default-Auswahlregel bzw. - Untermenge bzw. am höchsten priorisiert. Insbesondere wird bzw. ist diese globale Auswahlregel für die Applikation bzw. bei deren Ausführung angewendet bzw. diese globale Untermenge anzupassender Prozessparameter ausgewählt, sofern bzw. solange nachfolgend keine andere(n) Auswahlregel(n) bzw. Untermenge anzupassender Prozessparameter höher priorisiert wird bzw. ist. Mit anderen Worten ist in einer Ausführung eine applikationsspezifische globale bzw. Default-Auswahlregel bzw. -Untermenge vorgegeben.

Zusätzlich oder alternativ können eine oder mehrere Auswahlregeln, insbesondere Untermengen anzupassender Prozessparameter, auf Basis eines vorgegebenen Steuerbefehls der Applikation (um)priorisiert werden bzw. sein.

Dabei kann in einer Ausführung aus einem vorgegebenen Prozessbefehl der Applikation indirekt bzw. mittelbar eine (Um)Priorisierung einer oder mehrerer Auswahlregeln bzw. Untermengen abgeleitet werden.

In einer Weiterbildung gilt eine solche (Um)Priorisierung nur während der Durchführung bzw. Abarbeitung des jeweiligen Prozessbefehls, so dass nach dessen Durchführung bzw. Abarbeitung wieder die vorhergehende Priorisierung bzw. Auswahlregel(n) gelten.

So kann insbesondere aus einem Prozessbefehl (in) der Applikation, der eine Kraftregelung bedingt, geschlossen werden, dass eine Soll-Kraft erreicht bzw. eingehalten werden soll, und durch eine entsprechende Priorisierung der Auswahlregeln bzw. in einer Auswahlregel ein Geschwindigkeits-Prozessparameter ausgewählt werden, um durch (bedarfsweises) Absenken der Geschwindigkeit zur Nicht-Verletzung einer Geschwindigkeits-Sicherheitsüberwachungsfunktion eine Sicherheitsreaktion zu vermeiden, obwohl die Kraft eine parallel aktivierte Kraft-Sicherheitsüberwachungsfunktion verletzt, insbesondere (nur) während der Durchführung der Kraftregelung.

Umgekehrt kann insbesondere aus einem Prozessbefehl, der eine Positionsregelung bedingt, geschlossen werden, dass eine kontaktfreie Bewegung vorgesehen ist, und entsprechend durch eine entsprechende Priorisierung der Auswahlregeln bzw. in einer Auswahlregel ein Kraft-Prozessparameter ausgewählt werden, um durch bedarfsweise Absenkung einer Kraft zur Nicht-Verletzung einer Kraft-Sicherheitsüberwachungsfunktion eine Sicherheitsreaktion zu vermeiden, obwohl die Geschwindigkeit eine parallel aktivierte Geschwindigkeits-Sicherheitsüberwachungsfunktion verletzt, insbesondere (nur) während der Durchführung der Positionsregelung.

Mit anderen Worten kann eine Auswahlregel besagen, dass ein Kraft-Prozessparameter auszuwählen ist, falls eine Kraftregelung vorliegt, und/oder ein Geschwindigkeits-Prozessparameter auszuwählen ist, falls eine Positionsregelung vorliegt.

In einer Ausführung werden bzw. sind zusätzlich oder alternativ eine oder mehrere Auswahlregeln bzw. Untermengen auf Basis eines vorgegebenen (Auswahlregel- bzw. Untermengen-) Priorisierungsbefehls direkt bzw. unmittelbar priorisiert. Insbesondere kann so in der Applikation explizit eine (Um)Priorisierung während der (Ausführung) der Applikation kommandiert werden.

Mit anderen Worten kann in einer Ausführung durch einen entsprechenden Priorisierungsbefehl in der Applikation direkt die auszuwählende Untermenge anzupassender Prozessparameter vorgegeben werden.

Somit kann ein Steuerbefehl der Applikation, auf dessen Basis eine oder mehrere Auswahlregeln, insbesondere Untermengen anzupassender Prozessparameter, (um)priorisiert werden bzw. sind, insbesondere ein Priorisierungsbefehl sein, der die (Um)Priorisierung selber bzw. direkt bzw. explizit angibt bzw. kommandiert, insbesondere ausschließlich die (Um)Priorisierung angibt bzw. kommandiert. Gleichermaßen kann ein Steuerbefehl der Applikation, auf dessen Basis eine oder mehrere Auswahlregeln, insbesondere Untermengen anzupassender Prozessparameter, (um)priorisiert werden bzw. sind, insbesondere ein Prozessbefehl sein, der einen (Um)Priorisierung nicht selber bzw. nicht direkt bzw. nicht explizit angibt bzw. kommandiert. Ein Prozessbefehl kann insbesondere ein Befehl sein, der, insbesondere ausschließlich oder auch, eine Regelung bzw. Änderung einer Regelungsbetriebsart der Roboteranordnung und/oder eine Aktivität, insbesondere Bewegung, der Roboteranordnung angibt bzw. kommandiert.

Zusätzlich oder alternativ können eine oder mehrere Auswahlregeln, insbesondere Untermengen anzupassender Prozessparameter, auf Basis eines Zustands, insbesondere einer Pose, eines Sensorwertes oder eines I/O-Wertes, der Roboteranordnung (um)priorisiert werden bzw. sein. Insbesondere können beim Eindringen der Roboteranordnung in einen vorgegebenen Arbeitsraum und/oder Austreten der Roboteranordnung aus einem vorgegebenen Arbeitsraum eine oder mehrere Auswahlregeln bzw. Untermengen (um)priorisiert werden.

In einer Ausführung werden einer oder mehrere der Schritte des Verfahrens während eines Betriebs der Roboteranordnung, insbesondere eines Ausführens der Applikation, durchgeführt.

In einer Ausführung werden einer oder mehrere der hier beschriebenen Schritte, insbesondere während eines Betriebs der Roboteranordnung, insbesondere einer Durchführung der Applikation, mehrfach wiederholt. Insbesondere wird in einer Ausführung mehrfach jeweils eine Untermenge anzupassender Prozessparameter auf Basis der Regelanordnung ausgewählt und der bzw. die Prozessparameter dieser Untermenge derart angepasst, dass eine Verletzung wenigstens einer der Sicherheitsüberwachungsfunktionen vermeidbar ist bzw. vermieden wird bzw. werden kann, insbesondere während eines Betriebs der Roboteranordnung, insbesondere einer Durchführung der Applikation.

In einer Ausführung weist das System die Roboteranordnung auf und/oder ist zum Ausführen der Applikation der Roboteranordnung eingerichtet.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Roboteranordnung betreiben bzw. überwachen kann.

In einer Ausführung werden ein oder mehrere Verfahrensschritte teilweise oder vollständig automatisiert durchgeführt.

Weitere Vorteile und Merkmale ergeben sich aus den Unteransprüchen und den Ausführungsbeispielen. Hierzu zeigt, teilweise schematisiert,:
Fig. 1: ein System nach einer Ausführung der vorliegenden Erfindung; und
Fig. 2: ein Verfahren nach einer Ausführung der vorliegenden Erfindung.

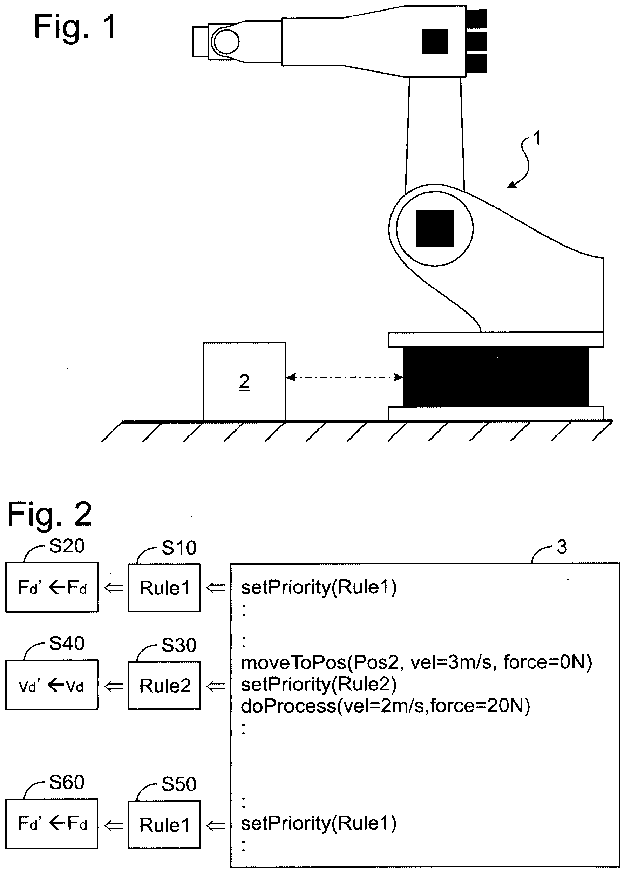

Fig. 1 zeigt ein System nach einer Ausführung der vorliegenden Erfindung mit einer Roboteranordnung, die aus einem Roboter 1 besteht, und mit einem S(ubs)ystem in Form einer Roboter- und Sicherheitssteuerung 2 zum Steuern der Roboteranordnung, insbesondere Ausführen einer Applikation in Form eines Steuerprogramms 3 der Roboteranordnung (vgl. Fig. 2), und Überwachen mehrerer parallel aktivierter Sicherheitsüberwachungsfunktionen.

Die Roboter- und Sicherheitssteuerung 2 ist zur Durchführung eines nachfolgend mit Bezug auf Fig. 2 näher erläuterten Verfahrens nach einer Ausführung der vorliegenden Erfindung eingerichtet und weist hierzu entsprechende Mittel, insbesondere in Form von Computerprogrammprodukten und/oder darauf abgespeicherten Programmen bzw. Programmmodulen auf.

Die Roboter- und Sicherheitssteuerung 2 bzw. deren hierzu eingerichtetes Mittel überwacht eine aktivierte erste Sicherheitsüberwachungsfunktion ESM1 in Form einer Kraft-Sicherheitsüberwachungsfunktion, die verletzt wird bzw. ist, wenn eine Kraft, die beispielsweise eine auf den Roboter 1 wirkende externe Kraft, eine von dem Roboter 1 ausgeübte Kraft oder eine Antriebskraft des Roboters 1 sein kann, einen Grenzwert von 10 N überschreitet (ESM1: |F| ≤ 10N), und eine parallel aktivierte zweite Sicherheitsüberwachungsfunktion ESM2 in Form einer Geschwindigkeits-Sicherheitsüberwachungsfunktion, die verletzt wird bzw. ist, wenn eine Geschwindigkeit des Roboters 1, beispielsweise seines TCPs oder eines Gelenks, einen Grenzwert von 1 m/s überschreitet (ESM2: |v| ≤ 1 m/s).

Mit den beiden Sicherheitsüberwachungsfunktionen ESM1 und ESM2 ist eine Sicherheitsreaktion, beispielsweise ein STOPO des Roboters 1, verknüpft, die von der Roboter- und Sicherheitssteuerung 2 nur auslöst wird, wenn sowohl die erste als auch die zweite Sicherheitsüberwachungsfunktion verletzt sind.

Somit können bei ausreichend kleiner externer Kraft (|F| ≤ 10N) beliebige Geschwindigkeiten realisiert werden, da dann die aktivierte und nicht verletzte erste Sicherheitsüberwachungsfunktion ESM1 einem Auslösen der Sicherheitsreaktion entgegenwirkt. Umgekehrt können bei ausreichend kleiner Geschwindigkeit (|v| ≤ 1 m/s) beliebige Kräfte realisiert werden, da dann die aktivierte und nicht verletzte zweite Sicherheitsüberwachungsfunktion ESM2 einem Auslösen der Sicherheitsreaktion entgegenwirkt.

Eine Verletzung der ersten Sicherheitsüberwachungsfunktion ESM1 kann insbesondere durch Anpassen einer Soll-Kraft F_{d} vermeidbar sein bzw. vermieden werden, eine Verletzung der zweiten Sicherheitsüberwachungsfunktion ESM2 insbesondere durch Anpassen einer Soll-Geschwindigkeit v_{d}. Entsprechend umfasst eine vorgegebene Menge {F_{d}, v_{d}} von Prozessparametern, durch die eine Verletzung wenigstens einer der Sicherheitsüberwachungsfunktionen vermeidbar ist bzw. vermieden wird bzw. werden kann, im Ausführungsbeispiel die Soll-Kraft F_{d} und die Soll-Geschwindigkeit v_{d}. Diese (Soll-)Prozessparameter können insbesondere den von der ersten bzw. zweiten Sicherheitsüberwachungsfunktion ESM1, ESM2 überwachten Ist-Prozessparametern entsprechend bzw. von denselben Größen abhängen, die diese an- bzw. vorgeben.

Das Steuerprogramm 3 umfasst die in Pseudocode angedeuteten Prozessbefehle "moveToPos(Pos2, vel=3m/s, force=0N)" und "doProcess(vel=2m/s,force=20N)", die eine kontaktfreie (vgl.: "force=0N") Zustellbewegung (vgl.: "moveToPos") des Roboters 1 in eine (Prozess)Pose Pos2 mit einer Geschwindigkeit von 3 m/s und eine anschließende Prozessbewegung (vgl.: "doProcess") instruieren, bei der eine Prozesskraft von 20N auf ein Werkstück ausgeübt werden soll (vgl.: "force=20N").

Wie vorstehend ausgeführt, kann die Sicherheitsreaktion gleichermaßen durch Einhalten einer ausreichend kleinen Kraft oder einer ausreichend kleinen Geschwindigkeit (möglichst) vermieden werden.

Allerdings ist es vorteilhafter, während der kontaktfrei geplanten Zustellbewegung die Kraft bedarfsweise zu reduzieren, um die gewünschte schnelle Zustellgeschwindigkeit von 3 m/s zu realisieren. Umgekehrt ist es während der Prozessbewegung vorteilhafter, die Geschwindigkeit bedarfsweise zu reduzieren, um die gewünschte Prozesskraft von 20 N zu realisieren.

Die Applikation in Form des Steuerprogramms 3 enthält hierzu Priorisierungsbefehle in der Form "setPriority(RuleX)", die eine erste oder zweite Auswahlregel Rule1 bzw. Rule2 einer vorgegebenen Regelanordnung höher priorisieren.

Dabei bestimmt die erste Auswahlregel Rule1 den ersten Prozessparameter F_{d} der vorgegebenen Menge {F_{d}, v_{d} } von Prozessparametern als auszuwählende Untermenge anzupassender Prozessparameter und die zweite Auswahlregel Rule2 den zweiten Prozessparameter v_{d} der vorgegebenen Menge {F_{d}, v_{d} } von Prozessparametern als auszuwählende Untermenge anzupassender Prozessparameter.

Aufgrund eines entsprechenden Priorisierungsbefehls "setPriority(Rule1)" am Anfang des Steuerprogramms 3 priorisiert die Roboter- und Sicherheitssteuerung 2 bei Ausführen der Applikation in einem Schritt S10 die erste Auswahlregel Rule1 als globale bzw. Default-Auswahlregel und wählt entsprechend aus der Menge vorgegebener Prozessparameter {F_{d}, v_{d} }, durch die eine Verletzung wenigstens einer der Sicherheitsüberwachungsfunktionen vermeidbar ist bzw. vermieden wird bzw. werden kann, den ersten Prozessparameter F_{d} als Untermenge aus.

Somit wird in einem Schritt S20 bei der Zustellbewegung gegebenenfalls die durch die globale Auswahlregel Rule1 ausgewählte Kraft heruntergeregelt (vgl. "F_{d}→F_{d}‴), um die erste Sicherheitsüberwachungsfunktion ESM1 nicht zu verletzen. Hierdurch wird vorteilhaft ein Auslösen des STOPO (möglichst) vermieden und zugleich trotzdem die gewünschte hohe Zustellgeschwindigkeit von 3 m/s realisiert.

Aufgrund eines nachfolgenden Priorisierungsbefehls "setPriority(Rule2)" priorisiert in einem Schritt S30 die Roboter- und Sicherheitssteuerung 2 anschließend die zweite Auswahlregel Rule2 am höchsten und wählt daher nun aus der Menge vorgegebener Prozessparameter {F_{d}, v_{d} }, durch die eine Verletzung wenigstens einer der Sicherheitsüberwachungsfunktionen (möglichst) vermieden werden kann, den zweiten Prozessparameter v_{d} als Untermenge aus.

Entsprechend wird in einem Schritt S40 bei der nun folgenden Prozessbewegung gegebenenfalls die Geschwindigkeit heruntergeregelt (vgl. "v_{d}→v_{d}‴), um die zweite Sicherheitsüberwachungsfunktion ESM2 nicht zu verletzen. Hierdurch wird vorteilhaft ein Auslösen des STOPO (möglichst) vermieden und zugleich die gewünschte hohe Prozesskraft von 20 N realisiert.

Aufgrund eines nachfolgenden Priorisierungsbefehls "setPriority(Rule1)" priorisiert in einem Schritt S50 die Roboter- und Sicherheitssteuerung 2 anschließend wieder die erste Auswahlregel Rule1 am höchsten und wählt daher nun wieder den ersten Prozessparameter F_{d} als Untermenge aus. Entsprechend wird in einem Schritt S60 nach der Prozessbewegung gegebenenfalls wieder die Kraft heruntergeregelt, um die erste Sicherheitsüberwachungsfunktion ESM1 nicht zu verletzen.

Obwohl in der vorhergehenden Beschreibung exemplarische Ausführungen erläutert wurden, sei darauf hingewiesen, dass eine Vielzahl von Abwandlungen möglich ist.

So kann beispielsweise die Roboter- und Sicherheitssteuerung 2 in einer Abwandlung aufgrund einer instruierten Positionsregelung zum Anfahren der Prozesspose Pos2 erkennen, dass eine kontaktfreie Bewegung geplant und die Geschwindigkeit der Zustellbewegung von vorrangigem Interesse ist. Dann kann die Roboter- und Sicherheitssteuerung 2 auf Basis des die Positionsregelung instruierenden Prozessbefehls für die Zustellbewegung die erste Auswahlregel Rule1 am höchsten priorisieren bzw. den ersten Prozessparameter F_{d} auswählen. Umgekehrt kann die Roboter- und Sicherheitssteuerung 2 aufgrund einer instruierten Kraft-, insbesondere Impedanzregelung zum Durchführen der Prozessbewegung erkennen, dass die Prozesskraft von vorrangigem Interesse ist. Dann kann die Roboter- und Sicherheitssteuerung 2 auf Basis des die Impedanzregelung instruierenden Prozessbefehls für die Prozessbewegung die zweite Auswahlregel Rule2 am höchsten priorisieren bzw. den zweiten Prozessparameter v_{d} auswählen. Entsprechend könnte in dieser Abwandlung der Priorisierungsbefehls "setPriority(Rule2)" an der Stelle des Schrittes S30 auch entfallen.

Gleichermaßen kann die Roboter- und Sicherheitssteuerung 2 in einer Abwandlung die erste Auswahlregel Rule1 höher priorisieren und damit den ersten Prozessparameter F_{d} auswählen und bedarfsweise die Kraft anpassen, wenn der Roboter 1 sich in einem ersten Arbeitsraum befindet, und umgekehrt die zweite Auswahlregel Rule2 höher priorisieren und damit den zweiten Prozessparameter v_{d} auswählen und bedarfsweise die Geschwindigkeit anpassen, wenn der Roboter 1 sich in einem zweiten Arbeitsraum befindet.

Im Ausführungsbeispiel ist zum besseren Verständnis je eine Auswahlregel Rule1/Rule2 mit einem Soll-Prozessparameter F_{d}/v_{d} bijektiv verknüpft, der bedarfsweise angepasst wird, um eine Verletzung einer einen entsprechenden Ist-Prozessparameter überwachenden Sicherheitsüberwachungsfunktion zu vermeiden. In einer Abwandlung kann jedoch zusätzlich oder alternativ auch eine Auswahlregel auf Basis einer Zusatzbedingung unterschiedliche Prozessparameter als auszuwählende Untermenge anzupassender Prozessparameter bestimmen.

Anstelle der Vorgabe einer Auswahlregel kann in einer Abwandlung auch direkt die jeweilige Untermenge anzupassender Prozessparameter angegeben bzw. (höher) priorisiert werden. Gleichermaßen können komplementär auch ein oder mehrere beizubehaltende Prozessparameter angegeben werden, so dass eine entsprechende Auswahlregel dann andere Prozessparameter aus der Menge vorgegebener Prozessparameter bestimmt bzw. auswählt, durch die eine Verletzung wenigstens einer der Sicherheitsüberwachungsfunktionen (möglichst) vermieden werden kann. So kann beispielsweise eine Auswahlregel den zweiten Prozessparameter v_{d} als Untermenge bestimmen, wenn eine Kraft als beizubehaltende Prozessparameter angegeben wird, und umgekehrt den ersten Prozessparameter F_{d} als Untermenge, wenn eine Geschwindigkeit als beizubehaltende Prozessparameter angegeben wird.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Roboter(anordnung)
- 2: Roboter- und Sicherheitssteuerung (System)
- 3: Steuerprogramm (Applikation)
- Rule1, Rule2: Auswahlregel
- ESM1, ESM2: Sicherheitsüberwachungsfunktion
- F_{d}: Soll-Kraft (Prozessparameter)
- v_{d}: Soll-Geschwindigkeit (Prozessparameter)

## Patentansprüche

1. Verfahren zum Steuern einer Roboteranordnung mit wenigstens einem Roboter (1), mit dem Schritt:
- Überwachen der Roboteranordnung durch mehrere parallel aktivierte Sicherheitsüberwachungsfunktionen;
und den während eines Ausführens einer Applikation (3) der Roboteranordnung mehrfach wiederholten Schritten:
- Auswählen (S10, S30, S50) einer Untermenge von Prozessparametern (F_{d}, v_{d}) aus einer vorgegebenen Menge von Prozessparametern auf Basis einer vorgegebenen Regelanordnung mit wenigstens einer Auswahlregel (Rule1, Rule2); und
- Anpassen (S20, S40, S60) der Prozessparameter dieser ausgewählten Untermenge von Prozessparametern derart, dass eine Verletzung wenigstens einer der Sicherheitsüberwachungsfunktionen vermieden wird;
wobei die vorgegebene Menge von Prozessparametern
- wenigstens einen Prozessparameter, durch dessen Anpassung eine Verletzung einer der parallel aktivierten Sicherheitsüberwachungsfunktionen vermeidbar ist, und
- wenigstens einen andere Prozessparameter aufweist, durch dessen Anpassung eine Verletzung einer weiteren der parallel aktivierten Sicherheitsüberwachungsfunktionen vermeidbar ist;
wobei das Verfahren den während des Ausführens der Applikation mehrfach wiederholten Schritt aufweist:
- Priorisieren wenigstens einer Auswahlregel der vorgegebenen Regelanordnung auf Basis der Applikation, insbesondere eines vorgegebenen Steuerbefehls der Applikation, und/oder auf Basis eines Zustands der Roboteranordnung;
wobei die vorgegebene Regelanordnung eine hierarchisierte Mehrzahl untereinander, insbesondere veränderbar, priorisierter Auswahlregeln umfasst und die Untermenge anzupassender Prozessparameter auf Basis einer am höchsten priorisierten Auswahlregel der Regelanordnung ausgewählt wird;
wobei eine mit den parallel aktivierten Sicherheitsüberwachungsfunktionen verknüpfte Sicherheitsreaktion der Roboteranordnung nicht ausgeführt wird, sofern wenigstens eine dieser Sicherheitsüberwachungsfunktionen nicht verletzt ist.

2. Verfahren nach Anspruch 1, wobei wenigstens eine Auswahlregel der Regelanordnung einer der Sicherheitsüberwachungsfunktionen, insbesondere bijektiv, einen der Prozessparameter aus der vorgegebenen Menge von Prozessparametern als auszuwählende Untermenge zuordnet.

3. Verfahren nach einem der vorhergehenden Ansprüche, wobei wenigstens eine der Sicherheitsüberwachungsfunktionen eine, insbesondere parametrierbare, Überwachung einer extern auf die Roboteranordnung wirkenden Kraft, einer Antriebskraft der Roboteranordnung, einer Pose der Roboteranordnung und/oder einer Zeitableitung hiervon umfasst.

4. Verfahren nach einem der vorhergehenden Ansprüche, wobei wenigstens einer der Prozessparameter der vorgegebenen Menge von einer Antriebskraft der Roboteranordnung, einer von der Roboteranordnung ausgeübten Kraft, einer Pose der Roboteranordnung und/oder einer Zeitableitung hiervon abhängt.

5. Verfahren nach einem der vorhergehenden Ansprüche, mit dem Schritt:
Priorisieren einer globalen Auswahlregel der vorgegebenen Regelanordnung auf Basis der Applikation.

6. Verfahren nach einem der vorhergehenden Ansprüche, mit dem, insbesondere während des Ausführens der Applikation mehrfach wiederholten, Schritt:
Priorisieren wenigstens einer Auswahlregel der vorgegebenen Regelanordnung auf Basis eines vorgegebenen Priorisierungs- oder Prozessbefehls.

7. Verfahren nach einem der vorhergehenden Ansprüche, mit dem, insbesondere während des Ausführens der Applikation mehrfach wiederholten, Schritt:
Priorisieren wenigstens einer Auswahlregel der vorgegebenen Regelanordnung auf Basis einer Pose der Roboteranordnung.

8. Verfahren nach einem der vorhergehenden Ansprüche, wobei wenigstens einer der Schritte während eines Betriebs der Roboteranordnung, insbesondere einer Ausführung der Applikation durchgeführt wird.

9. System (2) zum Steuern einer Roboteranordnung mit wenigstens einem Roboter (1), das zur Durchführung eines Verfahrens nach einem der vorhergehenden Ansprüche eingerichtet ist..

10. System mit einer Roboteranordnung, die wenigstens einen Roboter (1) aufweist, und mit einem System (2) zum Steuern der Roboteranordnung nach dem vorhergehenden Anspruch.

11. Computerprogrammprodukt mit einem von einem Computer lesbaren Medium und einem Programmcode, der auf dem von einem Computer lesbaren Medium gespeichert ist und bei der Ausführung durch ein System zum Steuern einer Roboteranordnung nach Anspruch 9 oder 10 das System veranlasst, ein Verfahren nach einem der vorhergehenden Ansprüche 1-8 durchzuführen.

## Claims

1. A method of controlling a robot arrangement comprising at least one robot (1), wherein the method comprises the step of:
- monitoring the robot arrangement by a plurality of safety monitoring functions activated in parallel;
and wherein the method comprises the following steps, which are repeated a plurality of times during the execution of an application (3) of the robot arrangement:
- selecting (S10, S30, S50), on the basis of a predetermined rule arrangement comprising at least one selection rule (Rule1, Rule2), a subset of process parameters (F_{d}, v_{d}) from a predetermined set of process parameters; and
- adjusting (S20, S40, S60) the process parameters of this selected subset of process parameters in such a way that a violation of at least one of the safety monitoring functions is avoided;
wherein the predetermined set of process parameters
- comprises at least one process parameter through the adjustment of which a violation of one of the safety monitoring functions activated in parallel can be avoided, and
- comprises at least one other process parameter through the adjustment of which a violation of a further one of the safety monitoring functions activated in parallel can be avoided;
wherein the method comprises the following step, which is repeated a plurality of times during the execution of the application:
- prioritising at least one selection rule of the predetermined rule arrangement on the basis of the application, in particular a predetermined control command of the application, and / or on the basis of a state of the robot arrangement;
wherein the predetermined rule arrangement comprises a hierarchised plurality of selection rules which are prioritised with respect to one another, in particular in a variable manner, and the subset of process parameters to be adapted is selected on the basis of a selection rule of the rule arrangement which has highest priority;
wherein a safety reaction of the robot arrangement which is linked to the safety monitoring functions activated in parallel is not executed if at least one of these safety monitoring functions is not violated.

2. The method according to claim 1, wherein at least one selection rule of the rule arrangement assigns, to one of the safety monitoring functions, in particular in a bijective manner, one of the process parameters from the predetermined set of process parameters as a subset to be selected.

3. The method according to any one of the preceding claims, wherein at least one of the safety monitoring functions comprises a monitoring, in particular in a parameterisable manner, of a force acting externally on the robot arrangement, a driving force of the robot arrangement, a pose of the robot arrangement and / or a time derivative thereof.

4. The method according to any one of the preceding claims, wherein at least one of the process parameters of the predetermined set depends on a driving force of the robot arrangement, a force exerted by the robot arrangement, a pose of the robot arrangement and / or a time derivative thereof.

5. The method according to any one of the preceding claims, wherein the method comprises the step of:
prioritising a global selection rule of the predetermined rule arrangement on the basis of the application.

6. The method according to any one of the preceding claims, wherein the method comprises the following step, in particular with the following step repeated several times during the execution of the application:
prioritising at least one selection rule of the predetermined rule arrangement on the basis of a predetermined prioritisation command or process command.

7. The method according to any one of the preceding claims, wherein the method comprises the following step, in particular with the following step repeated several times during the execution of the application:
prioritising at least one selection rule of the predetermined rule arrangement on the basis of a pose of the robot arrangement.

8. The method according to any one of the preceding claims, wherein at least one of the steps is carried out during operation of the robot arrangement, in particular during an execution of the application.

9. A system (2) for controlling a robot arrangement, wherein the robot arrangement comprises at least one robot (1), wherein the system is set up for carrying out a method according to any one of the preceding claims.

10. A system comprising a robot arrangement which comprises at least one robot (1), wherein the system further comprises a system (2) for controlling the robot arrangement according to the preceding claim.

11. A computer program product comprising a computer readable medium and a program code which is stored on the computer readable medium and which, when it is being executed by a system for controlling a robot assembly according to claim 9 or 10, causes the system to carry out a method according to any one of the preceding claims 1 to 8.

## Revendications

1. Procédé pour commander un ensemble de robot avec au moins un robot (1), avec l'étape :
- de surveillance de l'ensemble de robot par plusieurs fonctions de surveillance de sécurité activées parallèlement ;
et les étapes répétées plusieurs fois pendant une exécution d'une application (3) de l'ensemble de robot :
- de sélection (S10, S30, S50) d'un sous-ensemble de paramètres de processus (F_{d}, V_{d}) à partir d'un nombre prédéfini de paramètres de processus sur la base d'un ensemble de règles prédéfini avec au moins une règle de sélection (Rule1, Rule2) ; et
- d'adaptation (S20, S40, S60) des paramètres de processus de ce sous-ensemble sélectionné de paramètres de processus de telle sorte qu'une violation d'au moins une des fonctions de surveillance de sécurité est évitée ;
dans lequel le nombre prédéfini de paramètres de processus présente
- au moins un paramètre de processus, par l'adaptation duquel une violation d'une des fonctions de surveillance de sécurité activées parallèlement peut être évitée, et
- au moins un autre paramètre de processus, par l'adaptation duquel une violation d'une autre des fonctions de surveillance de sécurité activées parallèlement peut être évitée ;
dans lequel le procédé présente l'étape répétée plusieurs fois pendant l'exécution de l'application :
- de priorisation d'au moins une règle de sélection de l'ensemble de règles prédéfini sur la base de l'application, en particulier d'une instruction de commande prédéfinie de l'application, et/ou sur la base d'un état de l'ensemble de robot ;
dans lequel l'ensemble de règles prédéfini comprend une pluralité hiérarchisée de règles de sélection priorisées, en particulier pouvant être modifiées, entre elles, et le sous-ensemble de paramètres de processus à adapter est sélectionné sur la base d'une règle de sélection priorisée la plus élevée de l'ensemble de règles ;
dans lequel une réaction de sécurité de l'ensemble de robot combinée aux fonctions de surveillance de sécurité activées parallèlement n'est pas exécutée dans la mesure ou au moins l'une de ces fonctions de surveillance de sécurité n'est pas violée.

2. Procédé selon la revendication 1, dans lequel au moins une règle de sélection de l'ensemble de règles associe l'un des paramètres de processus provenant du nombre prédéfini de paramètres de processus en tant que sous-ensemble à sélectionner à l'une des fonctions de surveillance de sécurité, en particulier de manière bijective.

3. Procédé selon l'une quelconque des revendications précédentes, dans lequel au moins l'une des fonctions de surveillance de sécurité comprend une surveillance, en particulier paramétrable, d'une force agissant de manière externe sur l'ensemble de robot, d'une force d'entraînement de l'ensemble de robot, d'une position de l'ensemble de robot et/ou d'une dérivée par rapport au temps de celui-ci.

4. Procédé selon l'une quelconque des revendications précédentes, dans lequel au moins l'un des paramètres de processus du nombre prédéfini dépend d'une force d'entraînement de l'ensemble de robot, d'une force exercée par l'ensemble de robot, d'une position de l'ensemble de robot et/ou d'une dérivée par rapport au temps de celui-ci .

5. Procédé selon l'une quelconque des revendications précédentes, avec l'étape :
de priorisation d'une règle de sélection globale de l'ensemble de règles prédéfini sur la base de l'application.

6. Procédé selon l'une quelconque des revendications précédentes, avec l'étape, en particulier répétée plusieurs fois pendant l'exécution de l'application :
de priorisation d'au moins une règle de sélection de l'ensemble de règles prédéfini sur la base d'une instruction de priorisation ou de processus prédéfinie.

7. Procédé selon l'une quelconque des revendications précédentes, avec l'étape, en particulier répétée plusieurs fois pendant l'exécution de l'application :
de priorisation d'au moins une règle de sélection de l'ensemble de règles prédéfini sur la base d'une position de l'ensemble de robot.

8. Procédé selon l'une quelconque des revendications précédentes, dans lequel au moins l'une des étapes est mise en oeuvre pendant un fonctionnement de l'ensemble de robot, en particulier une exécution de l'application.

9. Système (2) pour commander un ensemble de robot avec au moins un robot (1), qui est conçu pour la mise en oeuvre d'un procédé selon l'une quelconque des revendications précédentes.

10. Système avec un ensemble de robot, qui présente au moins un robot (1), et avec un système (2) pour commander l'ensemble de robot selon la revendication précédente.

11. Produit-programme d'ordinateur avec un support pouvant être lu par un ordinateur et un code de programme, qui est mis en mémoire sur le support pouvant être lu par un ordinateur et lors de l'exécution par un système pour commander un ensemble de robot selon la revendication 9 ou 10 amène le système à mettre en oeuvre un procédé selon l'une quelconque des revendications précédentes 1 à 8.
